# EUROPÄISCHE PATENTSCHRIFT

(11) **EP 2 592 289 B1**
(45) Veröffentlichungstag und Bekanntmachung des Hinweises auf die Patenterteilung: **15.02.2017**
(21) Anmeldenummer: 12191554.0
(22) Anmeldetag: 07.11.2012
(51) Int. Cl.: F16C 35/02, F16C 17/02, F16C 33/20

(54) **Wellendurchführung eines Gehäuses einer Brennkraftmaschine und Lagerring einer Wellendurchführung**
Shaft passage of a housing of an internal combustion engine and bearing ring of a shaft passage
Passage d'arbre d'un boîtier d'un moteur à combustion interne et anneau de roulement d'un passage d'arbre

(30) Priorität: 09.11.2011 DE 102011117995
(43) Veröffentlichungstag der Anmeldung: 15.05.2013
(73) Patentinhaber: MANN + HUMMEL GMBH, 71638 Ludwigsburg (DE)
(72) Erfinder: Korn, Alexander, 74363 Güglingen (DE)

(56) Entgegenhaltungen:
- EP-A2- 1 270 974
- DE-A1- 3 417 127
- DE-A1- 3 731 710
- DE-A1- 4 125 203
- DE-U1- 20 012 673
- JP-A- H03 140 622

## Beschreibung

### Technisches Gebiet

Die Erfindung betrifft eine Wellendurchführung eines Gehäuses, insbesondere eines Saugrohrs, einer Brennkraftmaschine insbesondere eines Kraftfahrzeugs, mit einer Lagerringaufnahme, welche in einer Wand des Gehäuses angeordnet ist, und mit einem Lagerring für eine Welle, insbesondere eine Klappenwelle einer Klappensteuerung, der koaxial in die Lagerringaufnahme eingesteckt ist.

Ferner betrifft die Erfindung einen Lagerring einer Wellendurchführung eines Gehäuses, insbesondere eines Saugrohrs, einer Brennkraftmaschine insbesondere eines Kraftfahrzeugs, für eine Welle, insbesondere eine Klappenwelle einer Klappensteuerung, der koaxial in eine Lagerringaufnahme, welche in einer Wand des Gehäuses angeordnet ist, eingesteckt werden kann.

### Stand der Technik

Ein vom Markt her bekanntes Saugrohr einer Brennkraftmaschine weist eine Klappenwelle auf, auf der eine Mehrzahl von Klappen angeordnet ist. Die Klappenwelle ist drehbar in einem Gehäuse des Saugrohrs gelagert. Mit den Klappen können Öffnungen im Gehäuse geöffnet oder geschlossen werden, um einen Frischgasstrom zwischen Frischgassammelräumen und einem Endrohr im Inneren des Gehäuses zu steuern. Die Klappenwelle führt auf einer Seite durch einen Durchlass in einer Wand des Gehäuses. An dem Ende, welches sich außerhalb des Gehäuses befindet, weist die Klappenwelle einen Mitnehmerhebel auf. Über den Mitnehmerhebel kann die Klappenwelle von außerhalb des Gehäuses betätigt werden. Der Durchlass des Gehäuses weist eine Lagerringaufnahme auf, in der ein Lagerring angeordnet ist. In dem Lagerring ist die Klappenwelle drehbar gelagert. Der Lagerring ist von außen in die Lagerringaufnahme eingesteckt.

Die DE 41 25 203 A1 zeigt eine Axialsicherung für eine Rotorwelle eines Elektromotors, mit einem ersten Anschlagelement an der Welle oder am Rotor und einem zweiten Anschlagelement in der Form eines Sicherungsringes, der bei der Montage auf den freien Wellenstumpf der Rotorwelle aufgesteckt und durch Einrasten in einen ringförmigen Einstich an dem Wellenstumpf gehaltert wird, wobei beide Anschlagelemente des Rotors zwischen zwei stationären Anschlagflächen des Elektromotors angreifen und die Axialposition des Rotors fixieren.

Der Erfindung liegt die Aufgabe zugrunde, eine Wellendurchführung eines Gehäuses und einen Lagerring der oben genannten Art zu gestalten, bei der/dem der Lagerring in der Lagerringaufnahme einfach gegen Herausfallen gesichert ist. Insbesondere soll der Lagerring selbstsichernd sein. Die Montage der Wellendurchführung soll möglichst einfach sein.

### Offenbarung der Erfindung

Diese Aufgabe wird erfindungsgemäß dadurch gelöst, dass am Lagerring wenigstens eine Kralle angeordnet ist, die sich schräg zur Achse des Lagerrings über dessen radial äußere Umfangsseite hinaus erstreckt und die sich mit ihrem freien Ende entgegen einer Einsteckrichtung des Lagerrings in eine radial innere Umfangsseite der Lagerringaufnahme krallt.

Erfindungsgemäß weist der Lagerring wenigstens eine Kralle auf. Die Kralle erstreckt sich schräg entgegen der Einsteckrichtung des Lagerrings nach radial außen. Der Lagerring kann so einfach in Einsteckrichtung und in Richtung der wenigstens einen Kralle in die Lagerringaufnahme eingesteckt werden. Bei einer Bewegung des Lagerrings, insbesondere infolge einer Krafteinwirkung auf den Lagerring und/oder Vibrationen, entgegen der Einsteckrichtung verkrallt sich die Kralle automatisch in der radial inneren Umfangsseite der Lagerringaufnahme. Auf diese Weise wird verhindert, dass der Lagerring sich entgegen der Einsteckrichtung aus der Lagerringaufnahme heraus bewegen kann. So kann der Lagerring insbesondere beim Transport des Gehäuses oder beim Betrieb der Brennkraftmaschine nicht herausfallen oder herausgedrückt werden. Die wenigstens eine Kralle kann als Verliersicherung für den Lagerring dienen. Bei der Montage des Lagerrings in die Lagerringaufnahme muss das Vorhandensein der wenigstens einen Kralle nicht separat überprüft werden, da sie am Lagerring verliersicher angeordnet ist. Vorteilhafterweise kann der Lagerring von der Außenseite des Gehäuses in die Lagerringaufnahme eingesteckt sein, so dass die Einsteckrichtung zum Inneren des Gehäuses gerichtet ist. Beim Betrieb der Brennkraftmaschine verhindert die wenigstens eine Kralle, dass bei einem Überdruck im Inneren des Gehäuses im Vergleich zur Umgebung, welche auf den Lagerring eine Kraft entgegen der Einsteckrichtung bewirkt, der Lagerring aus der Lagerringaufnahme herausgedrückt werden kann. Auf eine zusätzliche Sicherung des Lagerrings kann verzichtet werden. Alternativ kann vorgesehen sein, dass der Lagerring von der Innenseite des Gehäuses in die Lagerringaufnahme eingesteckt wird. Die Einsteckrichtung ist so von innen nach außen gerichtet. In diesem Fall sichert die wenigstens eine Kralle den Lagerring bei einem Auftreten eines Unterdrucks im Gehäuse gegen Herausfallen aus der Lagerringaufnahme. Vorteilhafterweise kann die Wellendurchführung mit dem mit der wenigstens einen Kralle ausgestatteten Lagerring bei einer Wellendurchführung einer Klappenwelle einer Klappensteuerung verwendet werden. Sie kann aber auch bei einer andersartigen Wellendurchführung, insbesondere für eine Welle einer Abgasklappe oder einer Mündungsklappe eingesetzt werden. Falls die wenigstens eine Kralle fester ist als die radial innere Umfangsseite der Lagerringaufnahme, bohrt sich gewissermaßen die wenigstens eine Kralle bei einer Krafteinwirkung auf den Lagerring entgegen der Einsteckrichtung in die radial innere Umfangsseite der Lagerringaufnahme. Auf diese Weise kann die Selbstsicherung bei zunehmender Krafteinwirkung auf den Lagerring verbessert werden. Die wenigstens eine Kralle kann vorteilhafterweise in radialer Richtung elastisch federnd sein. Auf diese Weise kann der Einbau des Lagerrings in die Lagerringaufnahme vereinfacht, insbesondere die Montagekraft verringert, werden. Die wenigstens eine Kralle kann stattdessen auch in radialer Richtung starr sein. Die radial innere Umfangsseite der Lagerringaufnahme kann vorteilhafterweise aus einem elastischen Material sein.

Bei einer vorteilhaften Ausführungsform kann eine Mehrzahl von Krallen an einem ringförmigen Trägerabschnitt eines Krallenrings angeordnet sein, der mit dem Lagerring fest verbunden sein kann. Vorteilhafterweise können die Krallen in gleichmäßigen Abständen umfangmäßig an dem Trägerabschnitt angeordnet sein. Auf diese Weise kann sich der Krallenring umfangsmäßig gleichmäßig in der Lagerringaufnahme verkrallen. So kann eine Verkantung des Lagerrings in der Lagerringaufnahme, insbesondere bei einseitiger Krafteinwirkung auf den Lagerring, vermieden werden. Über den ringförmigen Trägerabschnitt kann der Krallenring umfangsmäßig gleichmäßig stabil mit dem Lagerring verbunden sein. Auf diese Weise kann die Kraftübertragung von den Krallen auf den Lagerring einerseits und den Krallen auf die Lagerringaufnahme andererseits verbessert werden.

Erfindungsgemäß ist die wenigstens eine Kralle, gegebenenfalls der Krallenring, in dem Lagerring eingegossen. Auf diese Weise ist einfach eine stabile Verbindung zwischen der wenigstens einen Kralle, insbesondere dem Krallenring, und dem Lagerring möglich. Der Lagerring kann gemeinsam mit den Krallen als ein Modulbauteil vorgefertigt werden. Mittels Eingießen, insbesondere nach einem Spritzgussverfahren, kann die wenigstens eine Kralle, insbesondere der Krallenring, einfach und stabil mit dem Lagerring verbunden werden. Mit dem eingegossenen Krallenring kann der Lagerring zusätzlich mechanisch in seiner Form stabilisiert werden.

Ferner kann vorteilhafterweise an dem ringförmigen Trägerabschnitt eine Mehrzahl von Gegenkrallen angeordnet sein, die sich jeweils auf der einer der Krallen zur Achse des Trägerabschnitts axial gegenüberliegenden Seite erstrecken können. Mit den Gegenkrallen kann der Trägerabschnitt an dem Lagerring abgestützt werden. Auf diese Weise können der Trägerabschnitt und damit der Krallenring in seiner Form und/oder seiner Position stabilisiert werden. Krafteinwirkungen auf den Lagerring entgegen der Einsteckrichtung können so gleichmäßiger auf den Lagerring übertragen werden. Mit den Gegenkrallen kann der Krallenring zusätzlich auf dem Lagerring fixiert werden.

Vorteilhafterweise kann der Lagerring aus Kunststoff sein. Ein Lagerring aus Kunststoff kann einfach gefertigt, insbesondere geformt oder gegossen, werden. Der Lagerring kann aus Kunststoff einfach bezüglich seiner Dichtwirkung, seiner Lagerwirkung, insbesondere der Gleitwirkung der Welle im Lagerring, und/oder der Montage optimiert werden. Kunststoff ist darüber hinaus leicht und kann einfach recycelt werden.

Bei einer weiteren vorteilhaften Ausführungsform kann die wenigstens eine Kralle, gegebenenfalls der ringförmige Trägerabschnitt und/oder die Gegenkrallen, aus Metall sein. Auf diese Weise kann die wenigstens eine Kralle stabil ausgeführt werden. Aus Metall können sowohl starre als auch elastische Krallen realisiert werden. Mit einer Metallkralle können auftretende Kräfte beim Verkrallen in der Lagerringaufnahme gut übertragen werden. Metall kann einfach gebogen werden.

Vorteilhafterweise kann wenigstens die radial innere Umfangsseite der Lagerringaufnahme aus Kunststoff sein. Vorzugsweise kann die gesamte Lagerringaufnahme aus Kunststoff sein. Auf diese Weise kann zumindest die radial innere Umfangsseite weich ausgestaltet sein, so dass sich die wenigstens eine Kralle gut einkrallen kann. Die radial innere Umfangsseite kann aus Kunststoff elastisch ausgestaltet sein, was das Einstecken des Lagerrings in die Lagerringaufnahme bei der Montage vereinfacht.

Bei einer weiteren vorteilhaften Ausführungsform kann die Lagerringaufnahme auf ihrer radial inneren Umfangsseite eine Mehrzahl von umfangsmäßigen Rastvertiefungen für die wenigstens eine Kralle aufweisen. Die wenigstens eine Kralle kann einfach in die Rastvertiefungen eingreifen, wodurch die Sicherung in der Lagerringaufnahme verbessert werden kann. Die radial innere Umfangsseite der Lagerringaufnahme kann dann auch aus einem im Vergleich zur wenigstens einen Kralle harten Material, insbesondere Metall, gefertigt sein. Die wenigstens eine Kralle kann sich dann in die Rastvertiefungen einkrallen.

Die technische Aufgabe wird erfindungsgemäß ferner durch den Lagerring dadurch gelöst, dass dieser wenigstens eine Kralle aufweist, die sich schräg zur Achse des Lagerrings über dessen radial äußere Umfangsseite hinaus erstreckt. Die oben im Zusammenhang mit der erfindungsgemäßen Wellendurchführung aufgezeigten Merkmale und Vorteile gelten für den erfindungsgemäßen Lagerring und dessen vorteilhafte Ausgestaltungen entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrische Darstellung eines Mittelteils eines Saugrohrs einer Brennkraftmaschine mit einer Klappenwelle, die in einem einen Krallenring aufweisenden Lagerring einer Wellendurchführung, gelagert ist;
- Figur 2: eine Detailansicht des Saugrohrmittelteils aus der Figur 1 im Bereich der Wellendurchführung;
- Figur 3: einen Schnitt des Saugrohrmittelteils aus den Figuren 1 und 2 im Bereich der Wellendurchführung;
- Figur 4: eine isometrische Darstellung des Lagerrings mit dem Krallenring der Wellendurchführung aus den Figuren 1 bis 3;
- Figur 5: einen Längsschnitt des Lagerrings mit dem Krallenring aus den Figuren 1 bis 4;
- Figur 6: eine isometrische Darstellung des Krallenrings aus den Figuren 1 bis 5.

In den Figuren sind gleiche Bauteile mit gleichen Bezugszeichen versehen.

### Ausführungsform(en) der Erfindung

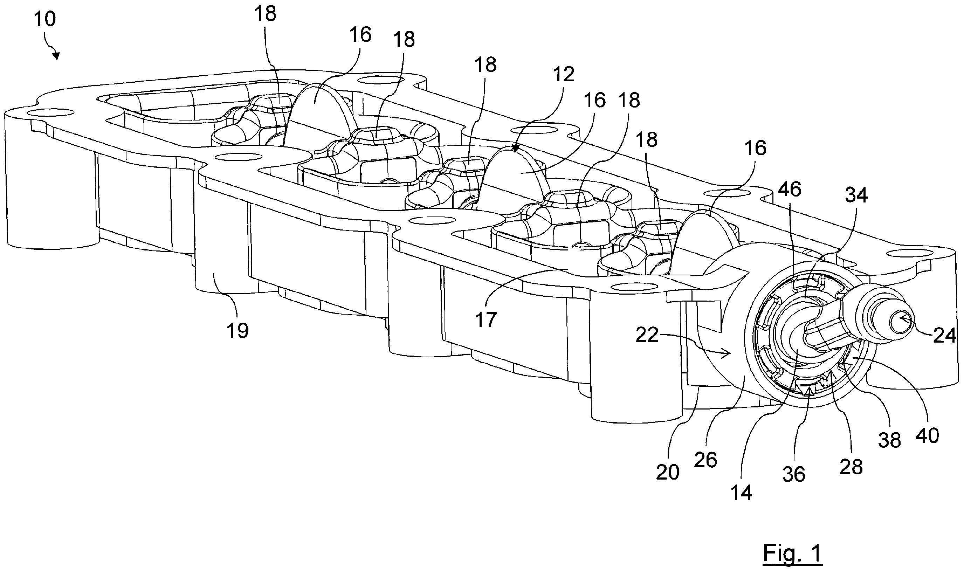

In den Figuren 1 bis 3 ist ein insgesamt mit dem Bezugszeichen 10 versehenes Mittelteil eines ansonsten nicht gezeigten Saugrohrs einer Brennkraftmaschine gezeigt. In dem Saugrohrmittelteil 10 ist eine Klappeneinheit 12 einer Klappensteuerung des Saugrohrs angeordnet. Die Klappeneinheit 12 umfasst eine Klappenwelle 14, auf der drei Klappen 16 angeordnet sind. Mit den Klappen 16 können entsprechende, in den Figuren nicht gezeigte, Öffnungen in dem Saugrohr geöffnet oder geschlossen werden, um in hier nicht weiter interessierender Weise einen Frischgasstrom zwischen Frischgassammelräumen und einem Endrohr im Inneren des Saugrohrs zu steuern.

In einem Innenraum 17 eines Gehäuses 19 des Saugrohrmittelteils 10 ist die Klappenwelle 14 in fünf Lagerblöcken 18 drehbar gelagert. Mit einem Ende führt die Klappenwelle 14 durch einen Wellendurchlass 22 einer Wellendurchführung 23 in einer Seitenwand 20 des Saugrohrmittelteils 10 aus dem Gehäuse 19 heraus. Außerhalb des Gehäuses 19 weist die Klappenwelle 14 einen Mitnehmerhebel 24 auf, der sich im Wesentlichen senkrecht zur Achse der Klappenwelle 14 erstreckt. Die Klappenwelle 14, die Klappen 16 und der Mitnehmerhebel 24 sind vorzugsweise aus einem Stück. Sie können aber auch aus separaten Bauteilen zusammengesetzt sein.

Der Wellendurchlass 22 hat etwa die Form eines hohlen Kreiszylinders aus Kunststoff, der einstückig in der Seitenwand 20 angeordnet ist. Der Wellendurchlass 22 ist an beiden Stirnseiten offen. Er weist radial innen eine zur Klappenwelle 14 koaxiale Lagerringaufnahme 26 auf. Die radial innere Umfangsseite der Lagerringaufnahme 26 ist kreiszylinderförmig. Die Lagerringaufnahme 26 weist auf ihrer dem Innenraum 17 zugewandten Stirnseite einen Anschlagkragen 27 für einen Lagerring 28 der Wellendurchführung 23 auf. Im Bereich ihrer dem Innenraum 17 des Saugrohrmittelteils 10 abgewandten Stirnseite ist die Lagerringaufnahme 26 im Anschluss an eine Stufe in ihrem Querschnitt vergrößert.

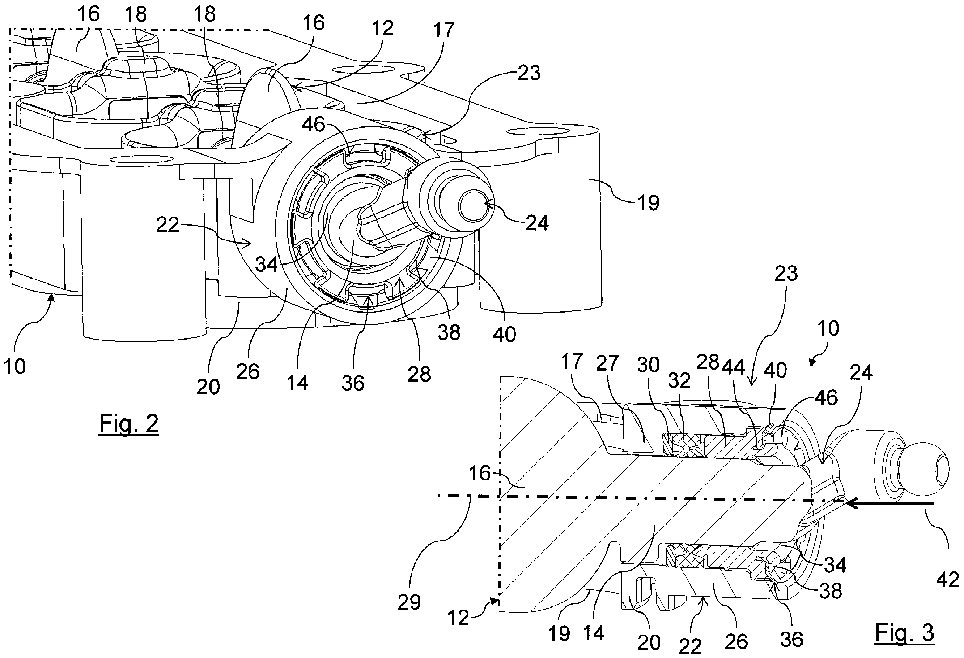

Der Lagerring 28 ist koaxial in die Lagerringaufnahme 26 eingesteckt. Der Lagerring 28 ist aus Kunststoff. In dem Lagerring 28 ist die Klappenwelle 14 koaxial um eine in der Figur 3 angedeuteten Achse 29 des Lagerrings 28 drehbar gelagert. Axial zwischen dem Lagerring 28 und dem Anschlagkragen 27 sind, wie in der Figur 3 gezeigt, von dem Anschlagkragen 27 aus betrachtet hintereinander, eine ringförmige Gleitscheibe 30 und eine ringförmige Wellendichtung 32 angeordnet.

Die radial äußere Umfangsseite des Lagerrings 28 ist entsprechend der radial inneren Umfangsseite der Lagerringaufnahme 26 abgestuft. Der Außendurchmesser seines querschnittverminderten Abschnittes entspricht dem Innendurchmesser des querschnittverminderten Abschnittes der Lagerringaufnahme 26. Der Außendurchmesser seines querschnittvergrößerten Abschnitts entspricht dem Innendurchmesser des querschnittvergrößerten Abschnitts der Lagerringaufnahme 26.

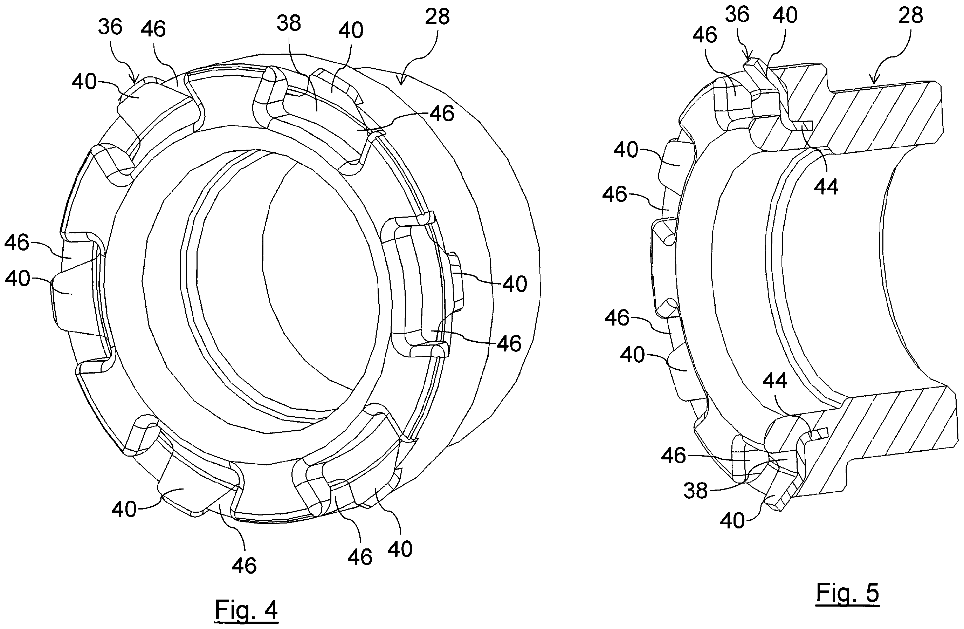

Der Lagerring 28 ist im Detail in den Figuren 4 und 5 gezeigt. An seiner radial inneren Umfangsseite ist der Lagerring 28 abgestuft. Im Bereich seines radial außen querschnittvergrößerten Abschnitts ist der Lagerring 28 auch radial innen im Querschnitt vergrößert. Die Klappenwelle 14 ist im Bereich des querschnittvergrößerten Abschnitts des Lagerrings 28 verjüngt. Zwischen dem verjüngten Bereich der Klappenwelle 14 und dem querschnittvergrößerten Abschnitt des Lagerrings 28 besteht im Montagezustand, wie in der Figur 3 gezeigt, ein Spalt 34. Der Innendurchmesser des querschnittverringerten Abschnitts des Lagerrings 28 entspricht etwa dem Außendurchmesser der Klappenwelle 14 außerhalb von deren verjüngtem Bereich.

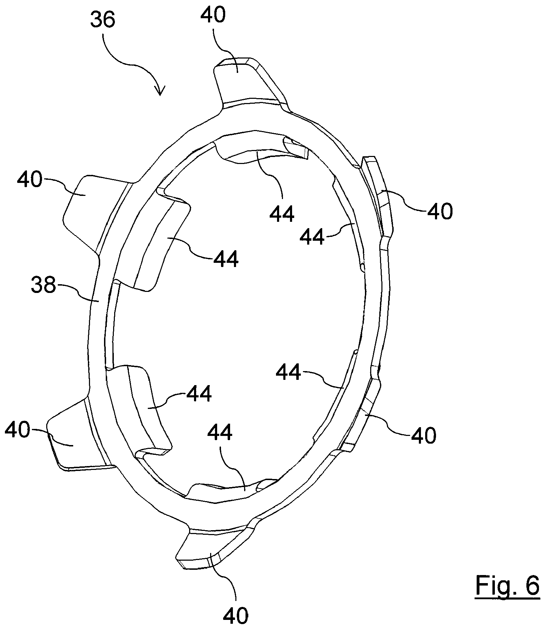

Auf der dem Mitnehmerhebel 24 zugewandten, querschnittvergrößerten Stirnseite des Lagerrings 28 ist ein Krallenring 36 aus Metall in den Lagerring 28 integriert. Der Krallenring 36 ist in der Figur 6 im Detail gezeigt. Der Krallenring 36 weist einen ringförmigen Trägerabschnitt 38 auf, der koaxial zum Lagerring 28 angeordnet ist. Der Trägerring 38 geht radial außen in sechs Krallen 40 über. Die Krallen 40 sind gleichmäßig entlang der radial äußeren Umfangsseite des Trägerrings 38 verteilt. Die Krallen 40 erstrecken sich jeweils schräg zu der Achse 29 des Lagerrings 28, im Montagezustand entgegen einer in der Figur 3 gezeigten Einsteckrichtung 42 des Lagerrings 38 in die Lagerringaufnahme 26. Die Einsteckrichtung 42 zeigt von der Außenseite des Gehäuses 19 zum Innenraum 17. Die freien Enden der Krallen 40 zeigen entgegen der Einsteckrichtung 42 vom Innenraum 17 des Gehäuses 19 weg. Auf seiner radial inneren Umfangsseite geht der Trägerring 38 in sechs Gegenkrallen 44 über. Jede der Gegenkrallen 44 liegt einer der Krallen 40 gegenüber. Die Gegenkrallen 44 erstrecken sich im Anschluss an eine jeweilige 90-Grad-Biegung von Trägerring 38 in Richtung der Achse des Trägerrings 38, im Montagezustand also in Einsteckrichtung 42, von den Krallen 40 weg. Der Trägerring 38 und die Gegenkrallen 44 sind in den Lagerring 28 eingegossen.

Auf seiner dem Innenraum 17 abgewandten äußeren Stirnseite weist der Lagerring 28 sechs Aussparungen 46 für die Krallen 40 auf, die zur äußeren Stirnseite und zur radial äußeren Umfangsseite des Lagerrings 28 hin offen sind. Die Aussparungen 46 lassen die Krallen 40 als auch den Trägerring 38 dort jeweils auf einer Seite frei. Die Krallen 40 können so in den Aussparungen 46 beispielsweise beim Einstecken des Lagerrings 28 in die Lagerringaufnahme 26 etwas elastisch nach radial innen federn. Die Gegenkrallen 44 hingegen sind vollständig vom Kunststoff des Lagerrings 28 umschlossen. Die Krallen 40 überragen jeweils die radial äußere Umfangsseite des Lagerrings 28. Bei eingebautem Lagerring 28 verkrallen sich, wie in den Figuren 1 bis 3 gezeigt, die freien Enden der Krallen 40 in der radial inneren Umfangsseite der Lagerringaufnahme 26 und verhindern so, dass der Lagerring 28 entgegen der Einsteckrichtung 42 nach außen fallen kann oder gedrückt werden kann.

Zur Herstellung des Saugrohrs wird das Gehäuse 19 des Saugrohrmittelteils 10 aus Kunststoff geformt, beispielsweise gegossen. Die Klappeneinheit 12 mit der Klappenwelle 14, den Klappen 16 und dem Mitnehmerhebel 24 wird einstückig aus einem Kunststoff hergestellt. Alternativ kann die Klappeneinheit 12 ganz oder teilweise auch aus einem anderen Material, beispielsweise einem Metall, hergestellt sein. Die Klappenwelle 14 kann auch aus einem Metall sein, welches mit Kunststoff umgossen wird. Die Klappen 16 können aus Kunststoff an die Klappenwelle 14 gegossen werden.

Der Lagerring 28 wird aus einem Kunststoff gegossen, wobei der Krallenring 36 verliersicher in den Lagerring 28 mit eingegossen wird.

Die Klappenwelle 14 wird mit dem Mitnehmerhebel 24 voran vom Innenraum 17 des Saugrohrmittelteils 10 aus durch den Wellendurchlass 22 gefädelt. Anschließend werden die Gleitscheibe 30 und die Wellendichtung 32 von außen über den Mitnehmerhebel 24 gefädelt und in Einsteckrichtung 42 in die Lagerringaufnahme 26 gesteckt. Der Lagerring 28 wird mit den Gegenkrallen 24 voran über den Mitnehmerhebel 24 gefädelt und in Einsteckrichtung 42 so tief in die Lagerringaufnahme 26 gesteckt, bis die Stufe in seiner radial äußeren Umfangsseite an der Stufe der radial inneren Umfangsseite der Lagerringaufnahme 26 anliegt. Beim Einstecken drücken sich die Krallen 40, welche entgegen der Einsteckrichtung 42 gerichtet sind, in die radial innere Umfangsseite der Lagerringaufnahme 26. Der Lagerring 28 sichert sich so selbst gegen Herausfallen. Anschließend werden die Lagerblöcke 18 geschlossen und das Gehäuse 19 des Saugrohrmittelteils 10 mit einem entsprechenden, nicht gezeigten Deckel verschlossen.

Erfolgt beispielsweise beim Betrieb der Brennkraftmaschine eine Krafteinwirkung auf den Lagerring 28 entgegen der Einsteckrichtung 42, beispielsweise durch einen Überdruck im Innenraum 17, so werden die Krallen 40 weiter in die radial innere Umfangsseite der Lagerringaufnahme 26 gedrückt, so dass sie sich dort verstärkt festkrallen. Auf diese Weise wird verhindert, dass der Lagerring 28 aus der Lagerringaufnahme 26 herausgedrückt wird. Auch bei einer Bewegung des Lagerrings 28 entgegen der Einsteckrichtung 42 beispielsweise infolge von Vibrationen krallen sich die Krallen 40 verstärkt in der Lagerringaufnahme 26 fest.

Bei dem oben beschriebenen Ausführungsbeispiel einer Wellendurchführung 23 mit einem Lagerring 28 sind unter anderem folgende Modifikationen möglich:
Die Erfindung ist nicht beschränkt auf eine Wellendurchführung 23 für eine Klappenwelle 14 eines Saugrohrs. Vielmehr kann sie auch bei andersartiger Wellendurchführung eines andersartigen Gehäuses einer Brennkraftmaschine verwendet werden. Beispielsweise kann sie auch bei einer Wellendurchführung für eine Abgasklappe oder eine Mündungsklappe einer Brennkraftmaschine verwendet werden.

Die radial innere Umfangsseite der Lagerringaufnahme 26 kann zusätzlich mit einer Mehrzahl von Rastvertiefungen versehen sein, die sich umfangsmäßig erstrecken und in die die Krallen 40 eingreifen können.

Der Lagerring 28 kann statt aus Kunststoff auch aus einem andersartigen Material, beispielsweise aus einem Metall oder Keramik, sein. Er kann auch aus einem Materialmix sein.

Der Wellendurchlass 22, insbesondere die Lagerringaufnahme 26, kann statt aus Kunststoff auch aus einem andersartigen Material, beispielweise einem Metall oder Keramik, sein. Es kann auch nur die radial innere Umfangsseite der Lagerringaufnahme 26 aus Kunststoff sein.

Der Krallenring 36 kann statt aus einem Metall auch aus einem andersartigen Material, beispielsweise einer Keramik oder einem Kunststoff oder einem Materialmix, sein.

Der Krallenring 36 kann auch weniger oder mehr als sechs Krallen 40 und/oder sechs Gegenkrallen 44 aufweisen.

Die Krallen 40 können auch anders als in Art eines Krallenrings 36 am Lagerring 28 befestigt sein.

Der Krallenring 36 kann statt in den Lagerring 28 eingegossen auch in andersartiger Weise an diesem fixiert sein.

Auf die Aussparung 46 an der Stirnseite des Lagerrings 28 kann auch verzichtet werden.

Die Krallen 40 können auch elastisch, beispielweise in radialer Richtung federnd, sein.

Der Wellendurchlass 22 kann auch so ausgestaltet sein, dass der Lagerring 28 vom Innenraum 17 aus in die Lagerringaufnahme 26 eingebracht werden kann. In diesem Fall ist die Einsteckrichtung 42 umgekehrt. Der Lagerring 28 wird dann so eingebaut, dass die Krallen 40 auch dann entgegen der nun von innen nach außen gerichteten Einsteckrichtung 42 gerichtet sind.

## Patentansprüche

1. Wellendurchführung (23) eines Gehäuses (19), insbesondere eines Saugrohrs (10), einer Brennkraftmaschine insbesondere eines Kraftfahrzeugs, mit einer Lagerringaufnahme (26), welche in einer Wand (20) des Gehäuses (19) angeordnet ist, und mit einem Lagerring (28) für eine Welle, insbesondere eine Klappenwelle (14) einer Klappensteuerung, der koaxial in die Lagerringaufnahme (26) eingesteckt ist, wobei am Lagerring (28) wenigstens eine Kralle (40) angeordnet ist, die sich schräg zur Achse (29) des Lagerrings (28) über dessen radial äußere Umfangsseite hinaus erstreckt und die sich mit ihrem freien Ende entgegen einer Einsteckrichtung (42) des Lagerrings (28) in eine radial innere Umfangsseite der Lagerringaufnahme (26) krallt, wobei die wenigstens eine Kralle (40), gegebenenfalls der Krallenring (36), in den Lagerring (28) eingegossen ist.

2. Wellendurchführung nach Anspruch 1, **dadurch gekennzeichnet, dass** an dem ringförmigen Trägerabschnitt (38) eine Mehrzahl von Gegenkrallen (44) angeordnet ist, die sich jeweils auf der einer der Krallen (40) zur Achse des Trägerabschnitts axial gegenüberliegenden Seite erstrecken.

3. Wellendurchführung nach einem der vorigen Ansprüche, **dadurch gekennzeichnet, dass** der Lagerring (28) aus Kunststoff ist.

4. Wellendurchführung nach einem der vorigen Ansprüche, **dadurch gekennzeichet, dass** die wenigstens eine Kralle (40), gegebenenfalls der ringförmige Trägerabschnitt (38) und/oder die Gegenkrallen (44), aus Metall ist.

5. Wellendurchführung nach einem der vorigen Ansprüche, **dadurch gekennzeichnet, dass** wenigstens die radial innere Umfangsseite der Lagerringaufnahme (26) aus Kunststoff ist.

6. Wellendurchführung nach einem der vorigen Ansprüche, **dadurch gekennzeichnet, dass** die Lagerringaufnahme auf ihrer radial inneren Umfangsseite eine Mehrzahl von umfangsmäßigen Rastvertiefungen für die wenigstens eine Kralle aufweist.

7. Lagerring (28) einer Wellendurchführung (23) eines Gehäuses (19), insbesondere eines Saugrohrs (10), einer Brennkraftmaschine insbesondere eines Kraftfahrzeugs, für eine Welle, insbesondere eine Klappenwelle (14) einer Klappensteuerung, der koaxial in eine Lagerringaufnahme (26), welche in einer Wand (20) des Gehäuses (19) angeordnet ist, eingesteckt werden kann, wobei der Lagerring (28) wenigstens eine Kralle (40) aufweist, die sich schräg zur Achse (29) des Lagerrings (28) über dessen radial äußere Umfangsseite hinaus erstreckt, wobei die wenigstens eine Kralle (40), gegebenenfalls der Krallenring (36), in den Lagerring (28) eingegossen ist.

8. Saugrohr einer Brennkraftmaschine, insbesondere eines Kraftfahrzeuges, mit einem Gehäuse (19) und einer am Gehäuse (19) angeordneten Wellendurchführung (23) für eine Welle, insbesondere eine Klappenwelle (14) einer Klappensteuerung, nach einem der Ansprüche 1 bis 6.

## Claims

1. Shaft feedthrough (23) of a housing (19), in particular of an intake manifold (10), of an internal combustion engine in particular of a motor vehicle, with a bearing ring support (26), which is disposed in a wall (20) of the housing (19), and with a bearing ring (28) for a shaft, in particular a flap shaft (14) of a flap control, which is inserted coaxially into the bearing ring support (26), wherein at the bearing ring (28) at least one claw (40) is disposed, which extends obliquely to the axis (29) of the bearing ring (28) beyond its radially outer circumferential side and which clings with its free end oppositely to an insertion direction (42) of the bearing ring (28) to a radially inner circumferential side of the bearing ring support (26), wherein the at least one claw (40), possibly the claw ring (36), is cast integrally in the bearing ring (28).

2. Shaft feedthrough according to claim 1, **characterized in that** a plurality of counter-claws (44) extending on the side opposing axially respectively one of the claws (40) relative to the axis of the support portion are disposed at the annular support portion (38).

3. Shaft feedthrough according to one of the above claims, **characterized in that** the bearing ring (28) is made of synthetic material.

4. Shaft feedthrough according to one of the above claims, **characterized in that** the at least one claw (40), possibly the annular support portion (38) and/or the counter-claws (44), are made of metal.

5. Shaft feedthrough according to one of the above claims, **characterized in that** at least the radially inner circumferential side of the bearing ring support (26) is made of synthetic material.

6. Shaft feedthrough according to one of the above claims, **characterized in that** the bearing ring support features on its radially inner circumferential side a plurality of circumferential locking recesses for the at least one claw.

7. Bearing ring (28) of a shaft feedthrough (23) of a housing (19), in particular of an intake manifold (10), of an internal combustion engine in particular of a motor vehicle, for a shaft, in particular a flap shaft (14) of a flap control, which can be inserted coaxially into a bearing ring support (26), which is disposed in a wall (20) of the housing (19), wherein the bearing ring (28) features at least one claw (40), which extends obliquely to the axis (29) of the bearing ring (28) beyond its radially outer circumferential side, wherein the at least one claw (40), possibly the claw ring (36), is cast integrally in the bearing ring (28).

8. Intake manifold of an internal combustion engine, in particular of a motor vehicle, with a housing (19) and a shaft feedthrough (23) disposed at the housing (19) for a shaft, in particular a flap shaft (14) of a flap control, according to one of the claims 1 to 6.

## Revendications

1. Passage d'arbre (23) d'un boîtier (19), en particulier d'un tube d'aspiration (10), d'un moteur à combustion interne en particulier d'un véhicule automobile, avec un logement de bague de palier (26) qui est disposé dans une paroi (20) du boîtier (19) et avec une bague de palier (28) pour un arbre, en particulier un arbre de papillon (14) d'une commande de papillon, qui est inséré en sens coaxial dans le logement de bague de palier (26), au moins une griffe (40) étant disposée sur la bague de palier (28), cette griffe s'étendant de manière oblique par rapport à l'axe (29) de la bague de palier (28) au-delà de son côté circonférentiel extérieur en sens radial et s'accrochant par son extrémité libre, à l'opposé d'un sens d'insertion (42) de la bague de palier (28), dans un côté circonférentiel intérieur en sens radial du logement de bague de palier (26), la griffe (40), au moins au nombre d'une, éventuellement la bague de griffe (36), étant coulée intégralement dans la bague de palier (28).

2. Passage d'arbre selon la revendication 1, **caractérisé en ce que** plusieurs contre-poignées (44) s'étendant sur le côté opposé en sens axial respectivement à l'une des griffes (40) par rapport à l'axe de la section de support sont disposées sur la section de support (38) annulaire.

3. Passage d'arbre selon l'une des revendications précédentes, **caractérisé en ce que** la bague de palier (28) est en plastique.

4. Passage d'arbre selon l'une des revendications précédentes, **caractérisé en ce que** la griffe (40), au moins au nombre d'une, éventuellement la section de support (38) annulaire et/ou les contre-poignées (44), sont en métal.

5. Passage d'arbre selon l'une des revendications précédentes, **caractérisé en ce qu'**au moins le côté circonférentiel intérieur en sens radial du logement de bague de palier (26) est en plastique.

6. Passage d'arbre selon l'une des revendications précédentes, **caractérisé en ce que** le logement de bague de palier présente sur son côté circonférentiel intérieur en sens radial plusieurs creux d'arrêt circonférentiels pour la griffe, au moins au nombre d'une.

7. Bague de palier (28) d'un passage d'arbre (23) d'un boîtier (19), en particulier d'un tube d'aspiration (10), d'un moteur à combustion interne en particulier d'un véhicule automobile, pour un arbre, en particulier un arbre de clapet (14) d'une commande de papillon, qui peut être inséré en sens coaxial dans un logement de bague de palier (26), ce logement pouvant être enfiché dans une paroi (20) du boîtier (19), la bague de palier (28) présentant au moins une griffe (40) qui s'étend de manière oblique par rapport à l'axe (29) de la bague de palier (28) au-delà de son côté circonférentiel extérieur en sens radial, la griffe (40), au moins au nombre d'une, éventuellement la bague de griffe (36), étant coulée intégralement dans la bague de palier (28).

8. Tube d'aspiration d'un moteur à combustion interne, en particulier d'un véhicule automobile, avec un boîtier (19) et un passage d'arbre (23) pour un arbre, en particulier un arbre de clapet (14) d'une commande de papillon, disposé sur le boîtier (19) selon l'une des revendications 1 à 6.
